Europäisches Patentamt

European Patent Office

Office européen des brevets

(11) Veröffentlichungsnummer: **0 237 016**
**A2**

# (12) EUROPÄISCHE PATENTANMELDUNG

(21) Anmeldenummer: **87103402.1**

(22) Anmeldetag: **10.03.87**

(51) Int. Cl.4: **C04B 41/65** , //C04B32/02

(30) Priorität: **12.03.86 DE 3608195**

(43) Veröffentlichungstag der Anmeldung:
**16.09.87 Patentblatt 87/38**

(84) Benannte Vertragsstaaten:
**AT BE CH DE FR IT LI LU NL**

(71) Anmelder: **KOCH MARMORIT GmbH**

**D-7801 Bollschweil(DE)**

(72) Erfinder: **Paul, Friedrich W., Dipl.-Ing.**
**Im Wiesengrund 31**
**D-7859 Efringen-Kirchen 6(DE)**
Erfinder: **Simon, Rainer, Dr.rer.nat.**
**Bugginer Weg 57**
**D-7840 Müllheim(DE)**

(74) Vertreter: **Bernhardt, Winfrid, Dr.-Ing.**
**Kobenhüttenweg 43**
**D-6600 Saarbrücken(DE)**

(54) **Verfahren und Mittel zum Sanieren von Beton.**

(57) Beton soll saniert werden durch Verteilen von Kalkmilch zum Ersatz karbonatisierten Kalziumhydroxids und damit zur Wiederherstellung einer das Bewehrungseisen vor Oxydation schützenden Alkalität.
Die Kalkmilch kann als solche injiziert werden. Man kann aber auch in Bohrungen Depots von Kalziumhydroxid oder Kalziumoxid anlegen und Wasser injizieren, in dem sich das, ggf. aus dem Kalziumoxid gebildete, Kalziumhydroxid verteilt.

Zugegeben werden können die Löslichkeit des Kalziumhydroxids erhöhende Mittel, Gleitmittel und auch weiteres Hydroxid, vorzugsweise Kaliumhydroxid.

EP 0 237 016 A2

## "Verfahren und Mittel zum Sanieren von Beton"

Die Erfindung betrifft ein Verfahren zum Sanieren von Beton. Sie betrifft ferner ein Mittel zum Durchführen des Verfahrens.

Beton ist häufig schon wenige Jahre nach seiner Herstellung sanierungsbedürftig. Deutlich sichtbare Schäden sind Abplatzungen über oberflächennahen, verrosteten Bewehrungsteilen. Um diese Schäden möglichst zu vermeiden, ist inzwischen die in der Vorschrift geforderte Mindestüberdeckung der Bewehrung durch den Beton von zwei auf fünf Zentimeter heraufgesetzt worden. Unvermeidlich sind Haarrisse an der Sonnen-und Wetterseite. Diese können auch zur Korrosion weiter innen liegender Teile der Eisenbewehrung führen.

Üblicherweise saniert man durch Abschlagen lockerer Stücke von der Betonoberfläche, Entfernen des Rostes vom freiliegenden bzw. freigelegten Eisen, Behandeln dieses Eisens mit Rostschutzmittel u.a., Füllen der von dem ausgebrochenen Beton hinterlassenen Vertiefungen mit Spachtelmasse, Imprägnieren und Überziehen der gesamten Oberfläche mit weiteren, verhältnismäßig elastischen Spachtelmassen und Anstrichen. Korrodierte Teile der Eisenbewehrung, die von optisch nicht geschädigtem Beton überdeckt sind, werden von den bisherigen Sanierungsmaßnahmen nicht erfaßt.

Der Erfindung liegt die Aufgabe zugrunde, eine weitere, bisher nicht behandelte, Alterungserscheinung im Beton aufzuheben.

Zu diesem Zweck wird gemäß der Erfindung Kalkmilch in dem Beton verteilt.

Die Maßnahme beruht auf folgender Erkenntnis:

Der Schutz des Bewehrungseisens vor Oxydation durch eindiffundierenden Sauerstoff beruht bekanntlich auf dem ausgeprägt alkalischen Milieu innerhalb des Betons. Es entsteht durch Ausscheidung von Kalziumhydroxid bei der Hydratation des Betons sowie dadurch, daß Wasser in dem Beton gehalten wird. Letzteres ist eine Folge der engen Porenweiten innerhalb des Betons, der geringen Grenzflächenenergie Beton/Wasser und des Vorhandenseins hygroskopischer Stoffe, auch des Kalziumhydroxids.

Genauere Daten für den Korrosionsschutz von Stahl in Beton liefert das Pourbaix-Diagramm. Darin ist die Abhängigkeit des Elektrodenpotentials des Eisens vom pH-Wert dargestellt. Aus dem Pourbaix-Diagramm geht hervor, daß Eisen im pH-Bereich von 9,5-13 stabil ist, d.h. vor Korrosion geschützt ist. Dieser Schutz besteht aus einer lückenlosen Schicht von Eisenoxiden und-hydroxiden sowie nach anderen Forschungsergebnissen auch aus Anteilen von Kalziumhydroxid in dieser Schutzschicht. Das bei der Hydratation von Beton entstehende Kalziumhydroxid befindet sich zum Teil in gelöstem Zustand in der Porenflüssigkeit des Betons. Diese ist praktisch eine Kalkmilch mit einem pH-Wert von 12,6.

Aus der Luft eindringendes Kohlendioxid setzt im Laufe der Zeit das Kalziumhydroxid in Kalziumkarbonat um. Damit sinkt die Alkalität des Milieus. Bei einem Absinken des pH-Wertes unter 9,5 setzt die Korrosion des Eisens ein.

Diese sogenannte Karbonatisierung ist gerade in Beton mit sonstigen Schäden besonders stark und tiefgehend, da diese den Zutritt des Kohlendioxids erleichtern.

Durch die Erfindungsmaßnahme wird das durch Karbonatisierung verlorengegangene Kalziumhydroxid wieder ersetzt.

Damit werden auch korrodierte Stahlteile unter optisch einwandfreiem Beton saniert.

Eine Möglichkeit zur Durchführung des Verfahrens besteht im Injizieren einer Kalkmilch, eine andere darin, Depots von Kalziumhydroxid oder Kalziumoxid in verschlossenen Bohrungen anzulegen und Wasser zu injizieren, in dem sich das, ggf. aus dem Kalziumoxid gebildete, Kalziumhydroxid verteilt.

Die zu injizierende Kalkmilch kann als solche naßgemahlen sein; darüber hinaus kann eine gröbere Fraktion abfiltriert sein. Zum Naßmahlen der Kalkmilch kann man z.B. Kugelmühlen anwenden wie die Planetenmühle "Fritsch Pulverisette 5".

Die Kalkmilch kann aber auch und wird vorzugsweise hergestellt sein aus trocken gemahlenem und/oder durch Sichten gewonnenem Kalziumoxid oder Kalziumhydroxid, vorzugsweise letzterem. Für die Trockenmahlung auf die gewünschte Feinheit eignet sich z.B. eine Fließbett-Gegenstrahlmühle. Mit dieser läßt sich, insbesondere durch Sichtmahlung in Kombination mit einem weiteren Sichter, ein Korngrößenbereich von 97% unterhalb 2 $\mu$, mindestens unterhalb 2,5 $\mu$, erreichen. Das ist insofern anzustreben, als Teilchen von 4 -5 $\mu$ und mehr die Poren zu verstopfen neigen, durch die hindurch sich die Kalkmilch im Beton verteilen soll. Die obere Grenze der für das Injizieren geeigneten Körnung dürfte bei etwa 3 $\mu$ liegen.

Trockengelöschter Kalk steht als vorgesichtetes Material auf dem Markt zur Verfügung mit einem Anteil von 30 -40% unterhalb 2 $\mu$ Man kann diesen Anteil absichten und den Rest wie oben erwähnt weiter aufmahlen. Man könnte auch von derartigem Material oder einem Weißfeinkalk nur die Feinstanteile unterhalb 2 μ oder auch unterhalb I μ ganz oder nur teilweise absichten und das übrige der üblichen Verwendung überlassen.

Für das Sichtmahlen kommen bei den in Betracht stehenden Mengen weniger großtechnische als Labor-und Technikumsanlagen in Frage.

Ein feinteiliges und hochreaktives Kalziumhydroxid kann schließlich auch durch Ablöschen von Kalziumoxid mit Alkohol hergestellt werden.

Der zur Injektion verwendeten Kalkmilch kann zur Erhöhung des pH-Wertes ein weiteres Hydroxid, vorzugsweise Kaliumhydroxid, zugesetzt werden, allerdings nur so viel, daß der pH-Wert noch unter I3 liegt. Die zugesetzte Menge Kaliumhydroxid pro Liter Kalkmilch wird dann unter 3 g pro Liter liegen, vorzugsweise bei etwa I g pro Liter. Dieses Kaliumhydroxid ist sofort löslich, d.h. liegt molekular gelöst vor, und läßt sich daher besonders gut in den Beton injizieren. Dadurch wird die Wirkung oder Injektion mit der Kalkmilch verbessert.

Die genannte Begrenzung ergibt sich aus dem Pourbaix-Diagramm: Liegt der pH-Wert in einer Lösung über I3, dann setzt ebenfalls eine Korrosion des Eisens ein.

Der Einsatz von Natriumhydroxid ist grundsätzlich ebenfalls möglich. Kaliumhydroxid ist aber insofern vorzuziehen, als Natriumverbindungen schlechtlösliche Ausblühungen bilden können oder sogar durch den auftretenden Kristallisationsdruck Absprengungen o.a. Schäden im Beton erzeugen können.

Kalium und Natrium sind an sich schon im Zement und damit auch in Beton in geringer Menge enthalten.

Für die Injizierung werden z.B. pro m² zwanzig Löcher z.B. in Abständen von 20 bis 30 cm -der für den betreffenden Beton ge eignete Abstand wird jeweils durch Versuche ermittelt -in den Beton gebohrt und vom Bohrstaub befreit, der die Poren verstopfen könnte. In die Löcher werden vorzugsweise Injektionsdüsen aus glasfaserverstärktem Polyamid eingesetzt, die außer einer axialen Austrittsöffnung seitliche Austrittsöffnungen aufweisen. Die Injektion erfolgt dann durch die Injektionsdüsen mit Drücken von z.B. I50 bis 230 bar. Eine dafür geeignete Hochdruckpumpe ist beispielsweise das Airless-Gerät "Wagner-Finish 204", das Drücke bis 240 bar erzeugt.

Die Kalkmilch wird so lange injiziert, bis sie an der Betonoberfläche austritt oder bis kein Durchfluß an der Injektionsdüse mehr feststellbar ist. Es werden Höfe erzeugt, die Alkalidepots darstellen; je nach Fall kann man auch die Ausbreitungsradien der Injektionsdüsen sich so überschneiden lassen, daß eine lückenlose Flächenerfassung des Betons parallel zur Betonebene zustandekommt.

Nach Abschluß der Injektionsarbeiten werden die Injektionsdüsen entfernt, im Falle von Einwegdüsen wird nur ihr aus dem Beton herausstehender Teil abgebrochen. Die Löcher werden geschlossen und die gesamte sanierte Oberfläche wird z.B. mit einem speziellen mineralischen Sanierungsmörtel überzogen, der dann das eingebrachte Alkalidepot vor Karbonatisierung schützt.

Andererseits kann man jedoch auch, je nach den Verhältnissen, Kalziumhydroxid mit der Porenflüssigkeit nach der Oberfläche oder nach anderen trocknen Stellen wandern und dort sich absetzen lasen, wo es dann mit dem Kohlendioxid der Luft karbonisiert und so eine besonders dichte, schützende Schicht bildet. Will man, umgekehrt, bei ungeschützter Oberfläche derartige Vorgänge vermeiden, etwa, um ein Auswaschen des noch nicht karbonisierten Kalziumhydroxids oder um Ausblühungen zu verhindern, kann man einen Schutzanstrich auf die sanierte Oberfläche aufbringen.

Schließlich besteht eine vorteilhafte Ausgestaltung der Erfindung in einem die Löslichkeit des Kalziumhydroxids erhöhenden Zusatz, vorzugsweise Phenol und/oder Glycerin oder Zucker.

Die Maßnahme ist insbesondere für die Erfindungsvariante des Kalziumhydroxid-oder Kalziumoxid-Depots von Bedeutung, da sie den Transport vom Depot an das Bewehrungseisen auf dem Wege der Diffusion durch die Lösung erleichtert. Ein weiteres Mittel des Transports vom Depot zum Eisen ist, das Depot hinter dem Eisen anzuordnen, also beispielsweise an 2 cm tief liegendem Bewehrungseisen vorbei 3 cm tief zu bohren und das Depot auf dem dritten Zentimeter der Bohrungstiefe anzulegen und die ersten beiden Zentimeter durch Füllung mit einer Mörtelpumpe oder einem Kunststoffstopfen, letzteres insbesondere im Falle des Kalziumoxids, zu verschließen.

Dann nimmt die Wanderung des injizierten Wassers nach der, in diesem Falle nicht oder nicht ganz dicht verschlossenen, Oberfläche das Kalziumhydroxid zu dem Eisen hin mit.

Für die Injektion des Wassers in Verbindung mit den Depots gilt im wesentlichen das gleiche, wie oben zur Injektion der Kalkmilch ausgeführt.

Das beschriebene Verteilen von Kalkmilch in dem Beton erfolgt vorzugsweise zusätzlich zu den üblichen Sanierungsarbeiten.

Es kommt jedoch, je nach Fall, auch allein in Betracht und in Kombinaton mit sonstigen Maßnahmen.

Auch ist es nicht auf den Oberflächenbereich des Betons beschränkt. Es kommt grundsätzlich überall in Frage, wo Alkalität zum Schutz des Bewehrungseisens vor Oxidation fehlt. So können z.B.

auch im Inneren des Betons als Gießfehler oder Verdichtungsfehler entstandene kleinere oder größere Hohlräume mit der Kalkmilch gefüllt werden.

Ein Mittel zum Durchführen des Verfahrens kennzeichnet sich durch eine industriell vorgefertigte und in Gebinden abgefüllte Injektionsflüssigkeit mit Hauptbestandteil Kalkmilch von einer Partikelgröße des Kalziumhydroxids von 97% unterhalb 3 μ bzw. durch eine Depotmasse mit Hauptbestandteil Kalziumhydroxid oder Kalziumoxid. Die vorgefertigte Injektionsflüssigkeit wird zur Verwendung beispielsweise 1 : 3 bis 1 : 10, vorzugsweise 1 : 4 bis 1 : 6, verdünnt.

## Ansprüche

1. Verfahren zum Sanieren von Beton,
dadurch gekennzeichnet,
daß Kalkmilch in dem Beton verteilt wird.

2. Verfahren nach Anspruch 1,
dadurch gekennzeichnet,
daß Kalkmilch mit gemahlenem und/oder durch Sichten oder Filtrieren gewonnenem Feststoff, vorzugsweise von unter 3 μ Korngröße, in den Beton injiziert wird.

3. Verfahren nach Anspruch 1 oder 2,
dadurch gekennzeichnet,
daß Kalkmilch aus einem Kalziumhydroxid in den Beton injiziert wird, das durch Löschen von Kalziumoxid mit Alkohol hergestellt worden ist.

4. Verfahren nach Anspruch 1,
dadurch gekennzeichnet,
daß Depots von Kalziumhydroxid oder Kalziumoxid in dem Beton angelegt werden und Wasser in den Beton injiziert wird.

5. Verfahren nach Anspruch 4,
dadurch gekennzeichnet,
daß die Depots hinter Bewehrungseisen angeordnet werden.

6. Verfahren nach einem der Ansprüche 1 bis 5,
dadurch gekennzeichnet,
daß die Kalkmilch bzw. das Depotmaterial und/oder das Injektionswasser mit einem die Löslichkeit des Kalziumhydroxids erhöhenden Mittel, vorzugsweise Phenol und/oder Glycerin oder Zucker, und/oder mit einem Gleitmittel versehen ist bzw. sind.

7. Verfahren nach einem der Ansprüche 1 bis 6,
dadurch gekennzeichnet,
daß der Kalkmilch bzw. dem Injektionswasser ein weiteres Hydroxid, vorzugsweise Kaliumhydroxid, zugegeben ist.

8. Verfahren nach einem der Ansprüche 1 bis 7,
dadurch gekennzeichnet,
daß Injektionsdüsen verwendet werden, die außer mindestens einer axialen Austrittsöffnung seitliche Austrittsöffnungen aufweisen.

9. Mittel zum Durchführen eines Verfahrens nach einem der Ansprüche 1 bis 8,
gekennzeichnet durch eine industriell vorgefertigte und in Gebinden abgefüllte Injektionsflüssigkeit mit Hauptbestandteil Kalkmilch von einer Partikelgröße des Kalziumhydroxids von 97% unter 3 μ bzw. durch eine Depotmasse mit Hauptbestandteil Kalziumhydroxid oder Kalziumoxid.

10. Mittel nach Anspruch 9,
dadurch gekennzeichnet,
daß die Injektionsflüssigkeit ein die Löslichkeit des Kalziumhydroxids erhöhendes Mittel, vorzugsweise Phenol und/oder Glycerin oder Zucker, und/oder ein Gleitmittel und/oder ein weiteres Hydroxid, vorzugsweise Kaliumhydroxid, enthält.